Europäisches Patentamt

European Patent Office

Office européen des brevets

(11) Veröffentlichungsnummer: **0 205 220 B1**

(12) **EUROPÄISCHE PATENTSCHRIFT**

(45) Veröffentlichungstag der Patentschrift: **12.02.92**

(51) Int. Cl.5: **G02F 1/01**, G02F 1/09, G02B 6/10, G02B 26/06

(21) Anmeldenummer: **86201012.1**

(22) Anmeldetag: **11.06.86**

(54) **Magneto-optische Wellenleiterstruktur zur Konversion von in der Struktur geführten Moden.**

(30) Priorität: **12.06.85 DE 3520991**

(43) Veröffentlichungstag der Anmeldung:
**17.12.86 Patentblatt 86/51**

(45) Bekanntmachung des Hinweises auf die Patenterteilung:
**12.02.92 Patentblatt 92/07**

(84) Benannte Vertragsstaaten:
**DE FR GB IT SE**

(56) Entgegenhaltungen:
**FR-A- 2 281 585**
**US-A- 3 600 611**

**IEEE JOURNAL OF OUANTUM ELECTRONICS, Band OE-18, Nr. 11, November 1982, Seiten 1975-1981, IEEE, New York, US; M. TATEDA et al.: "Design feasibility of a single-mode optical isolator"**

**APPLIED OPTICS, Band 20, Nr. 14, 15. Juli 1981, Seiten 2444-2450, New York, US; A. SHIBUKAWA et al.: "Optical TE-TM mode conversion in double epitaxial garnet waveguide"**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

Patentinhaber: **N.V. Philips' Gloeilampenfabrieken**
**Groenewoudseweg 1**
**NL-5621 BA Eindhoven(NL)**

(84) Benannte Vertragsstaaten:
**FR GB IT SE**

(72) Erfinder: **Dammann, Hans, Dr.**
**Eichenstrasse 27**
**W-2081 Tangstedt(DE)**
Erfinder: **Pross, Elke**
**Scheelring 14**
**W-2000 Hamburg 61(DE)**
Erfinder: **Rabe, Gert**
**Nieland 22**
**W-2080 Pinneberg(DE)**

EP 0 205 220 B1

PATENT ABSTRACTS OF JAPAN, Band 8, Nr. 38 (P-255)[1475], 18. Februar 1984; & JP-A-58 190 904 (NIPPON DENKI K.K.) 08-11-1983

PATENT ABSTRACTS OF JAPAN, Band 9, Nr. 101 (P-353)[1824], 2. Mai 1985; & JP-A-59 224 819 (HITACHI SEISAKUSHO K.K.) 17-12-1984

JOURNAL OF APPLIED PHYSICS, Band 44, Nr. 1, Januar 1973, Seiten 225-229, American Institute of Physics, New York, US; R.T. LYNCH et al.: "Stress birefringence in ferrimagnetic garnets"

Erfinder: **Tolksdorf, Wolfgang, Prof.**
**Königsberger Strasse 34**
**W-2082 Tornesch(DE)**
Erfinder: **Zinke, Manfred**
**Reyesweg 10**
**W-2000 Hamburg 76(DE)**

(74) Vertreter: **Koch, Ingo, Dr.-Ing.**
**Philips Patentverwaltung GmbH Wendenstrasse 35 Postfach 10 51 49**
**W-2000 Hamburg 1(DE)**

**Beschreibung**

Die Erfindung bezieht sich auf eine Anordnung zur Konversion von in einem magneto-optischen Wellenleiter geführten Moden gemäß dem Oberbegriff des Anspruchs 1.

Derartige, beispielsweise für optische Isolatoren oder Zirkulatoren benötigte planare Monomode-Wellenleiterstrukturen sind durch die GB-PS 15 29 374 bekannt.

In der wellenleitenden Schicht werden transversal-elektrische (TE) und transversal-magnetische (TM) Moden nicht-reziprok ineinander umgewandelt (Modenkonversion). Dies wird z.B. durch den Faraday-Effekt erreicht, der zur TE/TM-Modenkopplung in der in Ausbreitungsrichtung magnetisierten, wellenleitenden Schicht führt. Diese Kopplung ergibt aber nur dann die gewünschte vollständige Modenkonversion, falls beide beteiligten Moden, d.h. die TE- und die TM-Moden, die gleiche Fortpflanzungsgeschwindigkeit (Phasengeschwindigkeit) haben, da nur dann eine fortlaufende und kumulative Übertragung der Energie von einer Mode zur anderen möglich ist.

Für die Differenz $\Delta \beta$ der Ausbreitungskonstanten $\beta_{TM}$ und $\beta_{TE}$ der TM- bzw. TE-Moden wird deshalb zur Phasenanpassung der Wert Null angestrebt.

Für manche Anwendungen in der optischen Nachrichtentechnik wird ein extrem hoher Wirkungsgrad der nicht reziproken Modenkonversion in magneto-optischen Wellenleitern verlangt, für Isolatoren beispielsweise $\eta \geq 99{,}999\%$. Dies bedeutet insbesondere für den praktisch wichtigen Fall schwach geführter Moden eine extrem genaue Phasenanpassung. Die dazu erforderliche außerordentlich präzise Einstellung der für die beiden Moden wirksamen Brechungsindizes ist mit tragbaren Anforderungen an die Fertigungsgenauigkeit nicht möglich.

Im durch die GB-PS 15 29 374 bekannten Fall wird die Phasenanpassung mittels zusätzlich auf die wellenleitende Schicht aufgebrachter Zusatzschichten vorgeschlagen, deren erforderliche geometrisch genaue Zuordnung nur schwer erreichbar ist.

Nach Jap. J. Appl. Phys. 22 (1983), Seiten L 618 bis L 620 ist es bekannt, daß die beim Wachsen der Schichten entstehende Anisotropie derart beeinflußbar ist, daß die Differenz $\Delta \beta$ zu Null wird. Zur praktischen Nutzung wäre jedoch eine außergewöhnlich hohe Herstellungspräzision erforderlich.

Nach "Proc. 10th European Conference on Optical Communication, 1984, S. 42", kann eine Phasenanpassung auch durch eine auf die wellenleitende Schicht aufgebrachte Deckschicht mit form-doppelbrechender Gitterstruktur erzielt werden, welche allerdings ebenfalls einen unerwünscht hohen Fertigungsaufwand bedingt.

Darüberhinaus haben die beschriebenen bekannten Mittel zur Phasenanpassung den schwerwiegenden Nachteil, daß nachträgliche Korrekturmaßnahmen nicht möglich sind. Durch die US-PS 42 20 395 ist es für Wellenleiterstrukturen, bei welchen die Modenkopplung nicht in der wellenleitenden Schicht, sondern an ihren Grenzflächen zu Nachbarschichten erfolgt, bekannt, die Phasenanpassung durch eine stehende akustische Welle zu bewirken, deren akustische Frequenz so eingestellt wird, daß sich $\beta = 0$ ergibt. Die anzubringenden Anordnungen zur Erzeugung einer stehenden akustischen Welle sind kompliziert und nicht geeignet, um bei Wellenleiterstrukturen der eingangs genannten Art zum Erfolg zu führen.

Der Erfindung liegt die Aufgabe zugrunde, eine Anordnung der eingangs genannten Art so zu gestalten, daß die Phasenanpassung der TE- und TM-Moden mit höherer Genauigkeit erreichbar ist.

Die Lösung dieser Aufgabe ist im Anspruch 1 gekennzeichnet.

Erfindungsgemäße Wellenleiterstrukturen auf der Basis von reinem oder z.B. mit Blei substituiertem Yttrium-Eisen-Granat-Schichten, die auf einer GGG-Substratschicht epitaxial aus der Flüssigphase aufgebracht werden, weisen je nach Herstellungsart und Menge der Dotierungsstoffe unterschiedliche Werte $\Delta \beta$ auf, welche negativ oder positiv sein können und im allgemeinen nicht Null sind.

Drei Komponenten unterschiedlicher physikalischer Herkunft sind zu beachten:

$$\Delta \beta = (\Delta \text{Neff} + \Delta \text{ng} + \Delta \text{ns}) \cdot 2\pi/\lambda$$
($\lambda$ = Vakuum - Wellenlänge).

Die formbedingte Komponente $\Delta$ Neff ergibt sich selbst bei Verwendung isotroper Materialien in einer Größenordnung von etwa $- 10^{-5}$ und verursacht unterschiedliche Ausbreitungsgeschwindigkeiten der TM- und TE-Moden.

Eine wachstumsbedingte Doppelbrechung $\Delta$ng von etwa $+4 \cdot 10^{-4}$ entsteht durch Abweichung der Gitterstruktur von der Kubizität, da beim Filmwachstum kleine Fehlanordnungen der Kristall-Gitterbausteine auftreten können. Durch Tempern kann die wachstumsbedingte Doppelbrechung reduziert werden.

Die spannungsinduzierte Doppelbrechung ns kann je nach Menge z.B. des Bleigehalts Werte zwischen etwa $-4 \cdot 10^{-4}$ und $+4 \cdot 10^{-4}$ annehmen und entsteht durch Fehlanpassung (misfit) der Kristall-Gitterkonstanten der Substratschicht und der aufgebrachten Filmschichten. Eine Vorgabe des Wertes Δns ist allenfalls mit einer Genauigkeit von etwa $5 \cdot 10^{-5}$ erreichbar.

Bei der Herstellung einer erfindungsgemäßen Anordnung kann auf eine außergewöhnliche Präzision verzichtet werden. Es wurde festgestellt, daß in überraschend einfacher Weise die verbleibenden Werte Δ β ≠ 0 durch externe Aufbringung einer statischen Spannung beseitigt werden können. Dabei ist für positive Werte von Δ β eine Druckkraft und für negative eine Zugkraft aufzubringen. Die Spannung kann auf einfache Weise nachträglich dosiert und bei jedem einzelnen Exemplar einer Wellenleiterstruktur angepaßt werden, so daß stets der Restwert Δ β zu Null kompensiert wird. Mit einem Druck von 1 kN/cm² wurde ein Kompensationswert von ca $5 \cdot 10^{-5}$ erzielt.

Mit einer erfindungsgemäßen Anordnung sind auf einfache Weise Übereinstimmungen der Phasengeschwindigkeit der TE-und TM-Moden erreichbar, wie sie bisher mit dieser Genauigkeit nicht möglich waren.

Die mechanische Spannung kann in vorteilhafter Weise durch ein auf die Wellenleiterstruktur einwirkendes Biegemoment erzeugt werden, wobei die außerhalb der spannungsneutralen Achse auftretenden Biegespannungen genutzt werden, welche ebenfalls eine Verformung der Wellenleiterstruktur bewirken. Je nach Richtung des Biegemoments kann das Meterial der Wellenleiterstruktur in einer Richtung senkrecht zur Schichtebene komprimiert oder gedehnt werden. Dabei kann zur Erzeugung besonderer Effekte ein anisotroper Verformungsverlauf in der Ebene des Wellenleiters dadurch eingestellt werden, daß das Biegemoment in einer Ebene aufgebracht ist, welche von der Lichtausbreitungsrichtung unter einem Winkel von insbesondere 45° geschnitten wird.

Eine Druckkraft läßt sich gezielt auf den lichtleitenden Streifen der wellenleitenden Schicht aufbringen, wenn eine von einem Piezoelement erzeugte Kraft über einen Druckstempel auf die wellenleitende Schicht übertragen ist.

Besonders vorteilhafte Ergebnisse wurden bei Verwendung einer Wellenleiterstruktur erzielt, bei welcher auf die Substratschicht in folgender Reihenfolge weitere Schichten epitaxial aufgebracht sind:

Eine untere Absorptionsschicht,

eine untere Mantelschicht,

die Wellenleiterschicht,

eine obere Mantelschicht und

eine obere Absorptionsschicht.

Dabei sind vorteilhaft die Brechungsindizes der unteren und oberen Mantelschicht kleiner als derjenige der Wellenleiterschicht.

Die Erfindung wird anhand der Beschreibung von in der Zeichnung dargestellten vorteilhaften Ausführungdsbeispielen näher erläutert:

Figur 1     zeigt den prinzipiellen Aufbau einer erfindungsgemäßen Wellenleiterstruktur

Figur 2     zeigt schematisch eine Ausführungsart der Erfindung mit einem Piezoelement als Druckgenerator

Figur 3     deutet die Möglichkeit der Erzeugung der gewünschten Verformungskraft durch ein Biegemoment an.

Figur 4     zeigt gemessene Kennlinien des resultierenden Phasenanpassungsfaktors in Abhängigkeit der einwirkenden Druckspannung.

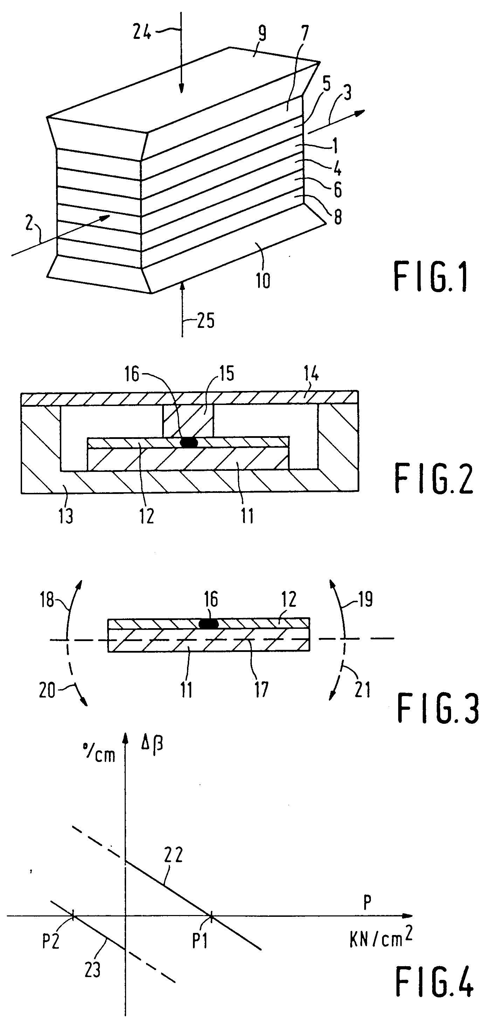

In Figur 1 ist ein symmetrischer schwach führender, magneto-optischer Wellenleiter dargestellt. Die Kern-Schicht (1) des Wellenleiters besteht aus magneto-optischem Material, z.B. aus reinem oder substituiertem Yttrium-Eisen-Granat (YIG). Sie führt in Richtung der Pfeile 2 (Eintritt) und 3 (Austritt) Licht in Form einer TE-Mode und/oder einer TM-Mode. Die untere und obere Mantelschicht (4 bzw. 5) haben einen Brechungsindex, der um ca. $5 \cdot 10^{-3}$ kleiner ist als derjenige der Kernschichtdes Wellenleiters. Diese Mantelschichten bestehen vorzugsweise auch aus magneto-optischem Material. Die untere und die obere Absorptionsschicht 6 bzw. 7 haben die Aufgabe, Mantelmoden, nämlich Moden, die nicht in der Kernschicht geführt werden, zu unterdrücken. Sämtliche Schichten sind nacheinander epitaxial auf die Substratschicht 8, insbesondere eine GGG-Schicht, aufgebracht. Durch die Stempel 9 und 10 einer in Figur 1 nicht dargestellten Einrichtung wird eine einstellbare Kraft (positiv oder negativ) auf die Wellenleiterstruktur ausgeübt. Diese bewirkt eine gleichmäßige Druck- oder Zugspannung, welche zu der gewünschten Verformung des Wellenleiters führt. Dadurch entsteht eine zusätzliche einstellbare Doppelbrechung in der Wellenleiterstruktur, durch welche die Phasenanpassung gezielt erreicht werden kann.

Typische Dicken der Schichten 1 bis 8 sind:

| Substratschicht 8 | 0,5 mm |
|---|---|
| Absorptionsschichten 6 und 7 | 3 $\mu$m |
| Mantelschichten 4 und 5 | 4 $\mu$m |
| Kernschicht 1 | 6 $\mu$m |

Die Anordnung zur Bildung einer einstellbaren Druck- oder Zugkraft ist in der Figur nur prinzipiell angedeutet und kann auf verschiedene an sich bekannte Weise ausgebildet sein. Dabei ist im Normalfall darauf zu achten, daß die mechanische Spannung über den gesamten magneto-optischen Wellenleiter gleichmäßig verteilt wird. Zur Erzielung spezieller Effekte kann es jedoch gegebenenfalls vorteilhaft sein, die mechanischen Kräfte ungleich auf die Schichtflächen einwirken zu lassen.

In Figur 2 ist die wellenleitende Struktur mit der Substratschicht 11 und der Wellenleiterschicht 12 in ein starres Gehäuse 13 eingelegt. Mittels des Piezoelements 14 ist über dem Stempel 15 eine mechanische komprimierende Druckkraft insbesondere auf den senkrecht zur Papierebene verlaufenden lichtführenden Streifen 16 aufbringbar. Da die zur Verformung erforderlichen Spannungen gezielt im lichtführenden Bereich 16 erzeugt werden, braucht das Piezoelement 14 nur relativ kleine Kräfte zu erzeugen.

Mittels eines Biegemoments können Druck- oder Zugspannungen aufgebracht werden, wie es anhand Figur 3 erkennbar wird. Wenn Biegekräfte in Richtung der Pfeile 18 und 19 auf die Wellenleiterstruktur einwirken, entsteht in dem lichtleitenden Schichtstreifen 16 eine Druckspannung parallel zur Schichtebene, wobei mit 17 die spannungslose neutrale Achse gestrichelt angedeutet ist. Die Druckspannung führt zur Ausdehnung insbesondere des Materials des Streifen 16 senkrecht zur Ebene der Schicht 12, als ob in dieser senkrechten Richtung eine Zugkraft ausgeübt wäre.

Bei mit gestrichelten Richtungen 20 und 21 einwirkenden Kräften entsteht im Streifen 16 dagegen eine Zugspannung, welche eine Komprimierung des Streifens 16 senkrecht zur Ebene der Schicht 12 bewirkt.

In Figur 4 sind Kennlinien 22 und 23 dargestellt, welche sich aufgrund von Messungen an zwei mit unterschiedlichem Bleianteil dotierten verschiedenartigen Proben ergeben haben.

Bei einer Probe mit ursprünglich positivem $\Delta \beta$ konnte gemäß Kennlinie 22 durch einen Druck pl von etwa 1,6 kN/cm$^2$ in Richtung der Pfeile 24 und 25 nach Figur 1 eine ideale Phasenkompensation erzielt werden. Bei einer anderen Probe mit ursprünglich negativem $\Delta \beta$ mußte zu diesem Zweck entsprechend Kennlinie 23 eine Zugspannung p2 aufgebracht werden.

**Patentansprüche**

1. Anordnung zur Konversion von in einem magneto-optischen Wellenleiter geführten Moden, mit einer Wellenleiterstruktur, die auf einer Substratschicht (8) epitaxial aufgebrachte Schichten (6,4,1,5,7) aufweist, von denen mindestens die die Moden führende wellenleitende Schicht (1) aus einem transparenten magneto-optischen Material besteht, mit Mitteln zur Beaufschlagung des magneto-optischen Materials (1) mit einem Magnetfeld zur Modenkonversion sowie mit Mitteln zur Anpassung der Phasengeschwindigkeiten der TE- und der TM-Moden,
dadurch gekennzeichnet, daß die Mittel zur Anpassung der Phasengeschwindigkeit aus einer Einrichtung (24,25 bzw. 13,14) bestehen, in welcher die Wellenleiterstruktur (8,6,4,1,5,7 bzw. 11,12,16) eingelegt ist und welche so gestaltet ist, daß durch diese eine einstellbare mechanische Verformungskraft auf die Wellenleiterstruktur ausübbar ist.

2. Anordnung nach Anspruch 1,
dadurch gekennzeichnet, daß die mechanische Verformungskraft durch ein auf die Wellenleiterstruktur (11,12,16 Fig.3) aufgebrachtes Biegemoment erzeugt ist.

3. Anordnung nach Anspruch 2,
dadurch gekennzeichnet, daß das Biegemoment in einer Ebene aufgebracht ist, welche von der Lichtausbreitungsrichtung unter einem Winkel von etwa 45° geschnitten wird.

4. Anordnung nach einem der Ansprüche 1 bis 3,
dadurch gekennzeichnet, daß die mechanische verformungskraft eine Druckkraft (24,25) ist, welche senkrecht auf die Schichtebenen einwirkt.

5. Anordnung nach einem der Ansprüche 1 bis 3,
dadurch gekennzeichnet, daß die mechanische Verformungskraft eine Zugkraft ist, welche senkrecht auf die Schichtebenen einwirkt.

**6.** Anordnung nach einem der Ansprüche 1 bis 5,
dadurch gekennzeichnet, daß die mechanische Verformungskraft von einem Piezoelement (14) über einen Druckstempel (15) auf die Wellenleiterschicht (12) übertragen wird.

**7.** Wellenleiterstruktur nach einem der Ansprüche 1 bis 6,
dadurch gekennzeichnet, daß auf die Substratschicht (8) in folgender Reihenfolge weitere Schichten epitaxial aufgebracht sind:
Eine untere Absorptionsschicht (6),
eine untere Mantelschicht (4),
die Wellenleiterschicht (1),
eine obere Mantelschicht (5) und
eine obere Absorptionsschicht (7).

**8.** Anordnung nach Anspruch 7,
dadurch gekennzeichnet, daß die Brechungsindizes der oberen (5) und unteren (4) Mantelschicht kleiner als derjenige der Wellenleiterschicht (1) sind.

## Claims

**1.** A device for the conversion of modes propagated in a magneto-optical waveguide, comprising a waveguide structure having layers (6, 4, 1, 5, 7) which are epitaxially applied to a substrate layer (8) and of which at least the waveguide layer (1) in which the modes propagate consists of a magneto-optical transparent material, with means for acting upon the magneto-optical material (1) by a magnetic field for mode conversion and with means for matching the phase velocities of the TE and TM modes, characterized in that the means for matching the phase velocities consist of a device (24, 25, and 13, 14) in which the waveguide structure (8, 6, 4, 1, 5, 7 and 11, 12, 16, respectively) is arranged which is formed in such a way that an adjustable mechanical deformation force can be exerted on the waveguide structure.

**2.** A device as claimed in Claim, 1, characterized in that the mechanical deformation force is produced by a bending moment applied to the waveguide structure (11,12, 16; fig. 3).

**3.** A device as claimed in Claim 2, characterized in that the bending moment is applied in a plane which is intersected by the direction of light propagation at an angle of about 45°.

**4.** A device as claimed in any one of the Claims 1 to 3, characterized in that the mechanical deformation force is a pressure force (24, 25) which acts perpendicularly to the layer planes.

**5.** A device as claimed in any one of the Claims 1 to 3, characterized in that the mechanical deformation force is a tensile force which acts perpendicularly to the layer planes.

**6.** A device as claimed in any one of the Claims 1 to 5, characterized in that the mechanical deformation force is transmitted by a piezo element (14) through a pressure die (15) to the waveguide layer (12).

**7.** A waveguide structure as claimed in any one of the Claims 1 to 6, characterized in that further layers are epitaxially applied to the substrate layer (8) in the following order of succession:
a lower absorption layer (6),
a lower cladding layer (4),
the waveguide layer (1),
an upper cladding layer (5) and
an upper absorption layer (7).

**8.** A device as claimed in Claim 7, characterized in that the refractive indices of the upper (5) and lower (4) cladding layers are lower than that of the waveguide layer (1).

## Revendications

1. Dispositif pour la conversion de modes guidés dans un guide d'ondes magnéto-optique, muni d'une structure de guide d'ondes comportant des couches (6, 4, 1, 5, 7) appliquées par voie épitaxiale sur une couche de substrat (8), dont au moins la couche de guide d'ondes guidant les modes (1) est constituée par un matériau magnéto-optique transparent, de moyens pour charger le matériau magnéto-optique (1) d'un champ magnétique pour la conversion de modes ainsi que de moyens pour adapter les vitesses de phases des modes Te et TM, caractérisé en ce que les moyens pour adapter la vitesse de phase sont constitués par un dispositif (24, 25, respectivement 13, 14) dans lequel est réalisée la structure de guide d'ondes (8, 6, 4, 1, 5, 7 respectivement 11, 12, 16) et qui est conçu de façon qu'il puisse exercer une force de déformation mécanique réglable sur la structure de guide d'ondes.

2. Dispositif selon la revendication 1, caractérisé en ce que la force de déformation mécanique est obtenue par un moment de flexion appliqué sur la structure de guide d'ondes (11, 12, 16, figure 3).

3. Dispositif selon la revendication 2, caractérisé en ce que le moment de flexion est appliqué dans un plan qui est coupé d'un angle d'environ 45° par la direction de propagation de lumière.

4. Dispositif selon l'une des revendications 1 à 3, caractérisé en ce que la force de déformation mécanique est une force de compression (24, 25) qui agit perpendiculairement au plan de la couche.

5. Dispositif selon l'une des revendications 1 à 3, caractérisé en ce que la force de déformation mécanique est une force de traction qui agit perpendiculairement au plan de la couche.

6. Dispositif selon l'une des revendications 1 à 5, caractérisé en ce que la force de déformation mécanique est transmise par un élément piézoélectrique (14) par l'intermédiaire d'un poinçon (15) à la couche de guide d'ondes (12).

7. Structure de guide d'ondes selon l'une des revendications 1 à 6, caractérisée en ce que d'autres couches sont appliquées par voie épitaxiale et dans l'ordre de succession suivant sur la couche de substrat 8:
une couche d'absorption inférieure (6),
une couche d'enveloppe inférieure (4),
la couche de guide d'ondes (1),
une couche d'enveloppe supérieure (5) et
une couche d'absorption supérieure (7).

8. Dispositif selon la revendication 7, caractérisé en ce que les indices de réfraction des couches d'enveloppe supérieure (5) et inférieure (4) sont inférieurs à ceux de la couche de guide d'ondes (1).

FIG.1

FIG.2

FIG.3

FIG.4